(19) Europäisches Patentamt

European Patent Office

Office européen des brevets

(11) **EP 0 837 727 B1**

(12) **EUROPEAN PATENT SPECIFICATION**

(45) Date of publication and mention
of the grant of the patent:
**02.10.2002  Bulletin 2002/40**

(51) Int Cl.[7]: **B01J 8/12**

(21) Application number: **96914533.3**

(22) Date of filing: **20.05.1996**

(86) International application number:
**PCT/SE96/00653**

(87) International publication number:
**WO 96/037287 (28.11.1996 Gazette 1996/52)**

(54) **AN APPARATUS FOR CYRRYING OUT A COUNTER FLOW PROCESS**

VORRICHTUNG ZUR DURCHFÜHRUNG EINES GEGENSTROMPROZESSES.

APPAREIL POUR EFFECTUER UN CIRCUIT D'ECOULEMENT A CONTRE-COURANT

(84) Designated Contracting States:
**DE FR GB IT**

(30) Priority: **21.05.1995  SE 9501917**

(43) Date of publication of application:
**29.04.1998  Bulletin 1998/18**

(73) Proprietor: **Tiberg, Lars**
**77020 Söderbärke (SE)**

(72) Inventors:
• **TIBERG, Lars**
**S-770 20 Söderbärke (SE)**

• **KARLSSON, Leif**
**S-517 00 Bollebygd (SE)**

(74) Representative: **Aslund, Roland**
**Avesta Patentbyra**
**P.O. Box 99**
**77501 Krylbo (SE)**

(56) References cited:
**EP-A- 0 205 866**          **WO-A-91/02586**
**DE-C- 4 129 167**

## EP 0 837 727 B1

**Description**

The present invention concerns an apparatus for carrying out an efficient contact between a solid material in the form of grains and a liquid or a gas. The process is performed in a closed vessel. The solid material is fed continually from the top whereby a slide cone upper surface is formed and the material continues to move downwards in a uniform motion. Simultaneously, a liquid or a gas passes upwards in an equally even movement, So, an efficient counter flow process is achieved.

BACKGROUND TECHNIQUE:

In many industrial processes, a continuous chemical reaction between a solid material and a liquid or a gas is brought about.

In the Swedish patent 8401478-6 it is described, among other things, how chemical reactions are brought about between a basic, solid material and harmful continuents in flue gases. The gases are led though a layer of granular limestone where the harmful sulfur dioxide, chlorhydric acid, fluorhydric acid, etc. reacts with surface of the stone, forming harmless products.

In other processes, a reaction is desired between for instance a substance that is dissolved or emulsified in a liquid and a solid material. Even in this case, the granular material is brought in contact with the liquid to reach the desired process on the surface of the solid material. Naturally the highest possible efficiency of the process is preferred. The chemical process should run as completely and as fast as possible with a minimum consumption of solid material. The ideal counter flow process implies that the liquid or the gas is fed continually and evenly through a bed of the solid material of even thickness, that it is then led off the bed after the passage and that fresh solid material is fed at the surface, where the liquid or the gas is led off the bed and that this solid material is transported evenly downwards in the bed and is led off at the bottom surface of the bed. The liquid or the gas is thus introduced along the bottom surface of the bed where the solid material has been exposed for the longest time for the reaction and they leave the bed at the upper surface where fresh material is fed continuously. Of course, the efficiency and the rapidity of the process will be increased if the surface of the bed is made as large as possible.

WO 91/02586 describes a bulk materials reactor comprising a charging device at the top, a moving bed of bulk material on discarding plates and a discharging device at the bottom. It has a gas inlet opening and a gas outlet opening on different sides of the moving bed. The plates can be oscillated so that, as a result of the movement, the bulk materials falls from them.

THE INVENTION:

Surprisingly it has now appeared that an almost ideal counter flow process can be brought about in a simpler matter. In a closed vessel, the solid granular material is fed from a hopper above the vessel centrallu through a hole or a slit. When the material moves continually down in the vessel, it simply flows out over the upper surface, the position and form of which is determined by the slide angle of the material. The liquid or the gas is fed evenly distributed under this surface at a distance from the surface that corresponds to the depth of the solid bed that is necessary to perform the chemical reactions. The liquid or the gas flows through the bed against the top surface and is evacuated from the space above the bed out from the closed vessel. Under the part of the bed that is participating in the reaction, the spent, solid material is moved downwards in such a way that the flow through the bed of granular material and fluid is as even as possible.

The invention will be described more precisely in the enclosed claims, in a more detailed description below and by help of drawings enclosed on which:

figure 1    shows a cross section of the vessel a
figure 2    shows a method to let in the liquid or gas into the process and
Figure 3    shows a situation with two funnels ,15, for illustrating the different terms in the formula.

Closer description of the invention:

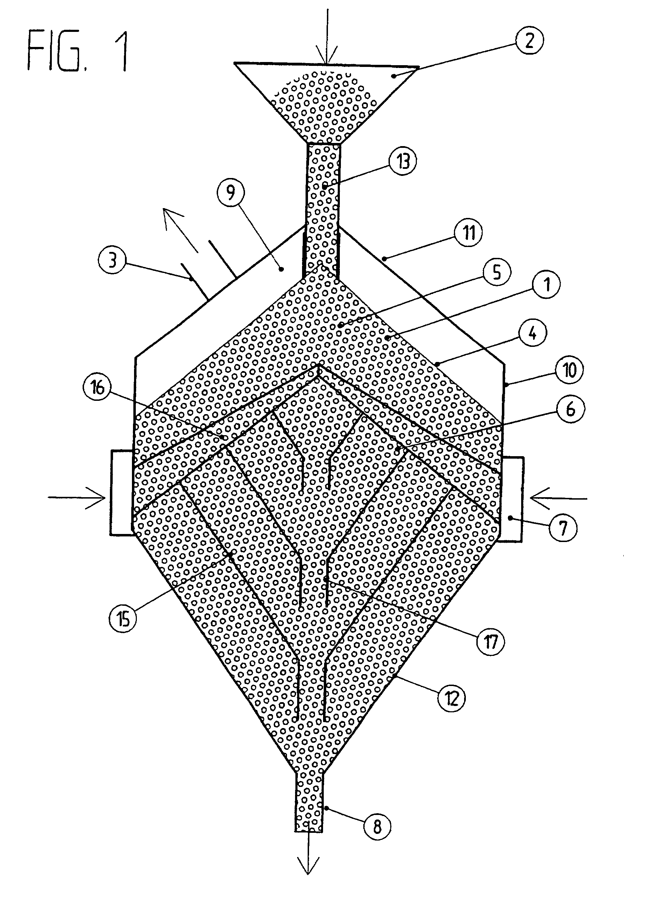

Naturally, the closed vessel, fig. 1, can be designed in many, different ways. R common and efficient design is described below.

The vessel, fig.1, consists of a vertical, cylindrical part, 10. Upwards the cylindrical part ,10, is connected to an upper conical part ,11, with the thin end upwards, and downwards to another lower conical part ,12, with the thin end downwards. The solid, granular material ,5, is filled centrally at the upper part of the upper conical part ,11, through a feed tube ,13, from a hopper ,2, above the upper conical part ,11. The feed tube ,13, which is preferably mounted

2

vertically is extending some distance down into the vessel ,fig 1. Naturally, the feed method can vary. For instance, the feed tube ,13, can be substituted to several feed tubes ,13. The reason the tubes ,13, should protrude down into the vessel ,fig. 1, is that the vessel is automatically filled as the solid granular material ,5, moves away from the mouth of the tube ,13. If the tube ,13, is designed as a telescope, the top level of the bed ,1, can easily be varied. In any case, there shall always be an open upper space ,9, that is free of solid material ,5, between the vessel wall on the top surface ,4, of the bed ,1. This open space ,9, allows the solid material ,5, to slide without obstacles over the top surface, 4, of the bed ,1.

Now, depending of the slide angle of the solid granular material ,5, an upper surface ,4, sloping out and down from the feed tube ,13, is formed on the solid reaction bed ,1. The solid material ,5, is distributed over the bed ,1, in the same rate as the material ,5, in the bed ,1, moves downward. How the liquid or gaseous material shall be led to the bed ,1, evenly distributed over a surface in the bed giving a reaction zone of the preferred thickness, Normally, the thickness of the bed ,1, is equal over the whole area. Deviations can be necessary, for instance, if the grain sizes of the granulate ,5, varies as the larger grains easily concentrate towards the periphery of the slide cone. However, the main factor governing the distance from the upper surface ,4, of the bed ,1, is then necessary extent of chemical reaction.

The inflow of liquid or gas should be disturbed over as large area as possible without forming too much obstacle to the downward flow of solid, granular material ,5. This could for instance be accomplished by mounting tubes with nozzles ,14, as spokes from a ring chamber ,7, around the cylindrical part ,10, of the vessel upwards towards the center of the reaction chamber. The slopes of the spokes should be chosen such that the thickness of the reaction zone that is equal to the distance between the spokes and the upper surface ,4, is the chosen. Specially in case the fluid is gas, the tubes ,14, con be exchanged to long hoods ,16, which leave an open space free from granular material , 5, on their lower side and leave open channels for the gas. The cross section of the hoods ,16, can for instance have a U or a half circular form. The liquid or the gas that is led in flows through the reaction bed ,1, towards the upper space ,9, over the upper surface ,4, and is led away through the exhaust ,3, in the wall of the vessel.

The granular material ,5, that moves down towards the area ,6, where liquid or gas enters the bed has now finished the chemical reaction and shall be transported out of the bed. This transort out of the bed must be done in such a way that the flow of the solid material ,5, through the bed ,1, is as even as possible over the total area in order to utilize the solid material ,15, as efficiently as possible.

Fig 1, shoves among others a number of concentric funnels ,15, that are mounted under the reaction bed. The granular material ,5, is now conducted by the funnels ,15, towards the center of the reaction chamber and out of it at its bottom through an outlet ,8. The diameter of the bottom openings in the funnels ,15, and the length of the outlet tubes ,17, determines the distribution of the flow between the different funnels ,15, and, if the right dimensions are chosen, the flow of solid material ,5, through the bed ,1, will be quite even.

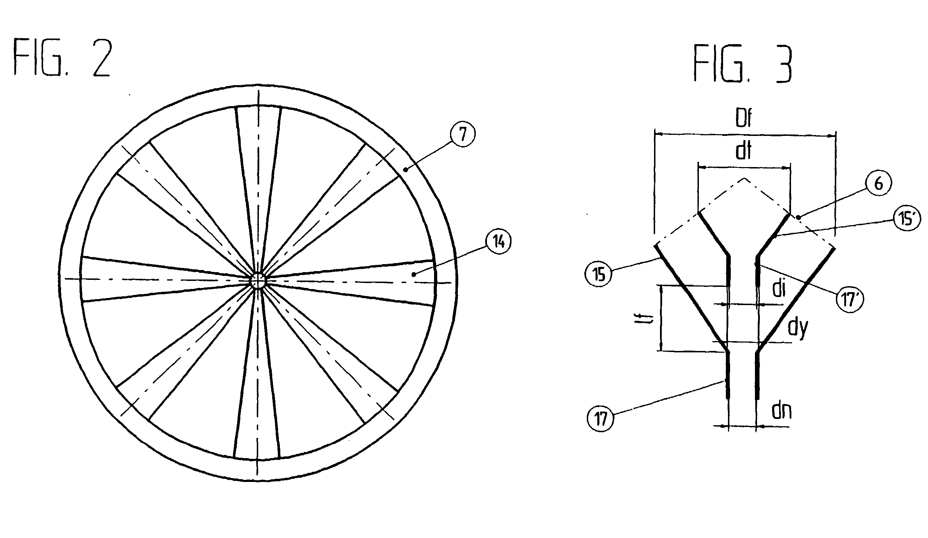

On figure 3 a situation with two funnels ,15,15', is illustrated. Here,

$D_t$ is the diameter of the lower, bigger funnel (15),
$d_t$ is the diameter of the upper, smaller funnel (15'),
$d_i$ is the inner diameter of the outlet tube (17') of the upper, smaller funnel (15'),
$d_y$ is the outer diameter of the outlet tube (17') of the same funnel (15')
$d_n$ is the inner diameter of the outlet tube (17) of the lower bigger funnel (15),
$I_f$ is the distance from the bottom end of the outlet tube (17') from the smaller funnel (15') to the outlet (17) of the bigger funnel (15),

All dimensions are given in meters. Now, the following formula gives the condition for an even flow in these two funnels ,15,:

$$d_t^2 \times ((2 \times I_f \times \text{constant} + d_n)^2 - dy^2) = d_i^2 \times (D_t^2 - d_t^2)$$

The value of the constant is constant for every type of granular material ,5, but varies with different materials ,5, from 0,12 to 0,21. The right value for a certain granular material ,5, must be determined with an experiment. Once the value of the constant is determined, any type and dimension of funnel bed design can be calculated.

In reaction beds with large upper surfaces ,4, it may be a problem that the natural slide angle and thus the depth of bed varies. For this reason a number of concentric rings can be mounted around the feed tube ,13, protuding a small measure down in the upper surface ,4, of the bed ,1, thus controlling the upper level of the bed ,1.

## EP 0 837 727 B1

**Claims**

1. An apparatus for carrying out a counter-flow process in a reaction vessel with a solid, granular material (5) through which a counter-flow of a liquid or a gas is conducted **characterized by**

   a closed reaction vessel (fig. 1) with a vertical, cylindrical part (10) and a lower conical part (12) which tapers downwards from the cylindrical part (10) and ends in an outlet (8) for the granular material (5), and
   a hopper (2) situated above the vessel (fig. 1) which hopper (2) ends downwards in a pipe (13), which leads the granular material (5) to move by gravity from the upper hopper (2) down to the center of the cylindrical part (10) of said vessel and then freely flows from the center out towards the wall of the cylindrical part (10) over a surface (4) which is created by the slide angle of the granular material (5) and after that is continuously moved downwards and leaves the vessel through the outlet (8),
   the vessel being equipped with an inlet (7) and an outlet (3) of the liquid or the gas where the inlet (7) is situated below the upper surface (4) of the granular material bed (5) in such a way that the planned thickness of the reaction zone is formed and the outlet (3) is situated above the top surface (4),
   and below the bottom of the reaction zone a number of concentric, circular funnels (15, 15') are disposed, having conical surfaces that are parallel to the lover conical part (12) of the reaction vessel and having upper endslying immediately below said reaction zone and the funnels (15, 15') end downwards with a tubular outlet (17, 17').

2. An apparatus according to claim 1 **characterized by**

   the distance from the bottom end of the outlet tube (17') from one upper funnel (15') to the outlet (17) of the next, lower funnel (15) being chosen according to the formula:

   $$d_t^2 \times ((2 \times l_f \times constant + d_n)^2 - d_y^2) = d_i^2 \times (D_t^2 - d_t^2)$$

   where

   $D_t$    is the diameter of the lower, bigger funnel (15)
   $d_t$    is the diameter of the upper, smaller funnel (15')
   $d_i$    is the inner diameter of the outlet tube (17') of the upper, smaller funnel (15'),
   $d_y$    is the outlet diameter of the outlet tube (17') of the same funnel (15')
   $d_n$    is the inner diameter of the outlet tube (17) of the lower bigger funnel (15)
   $l_f$    is the distance from the bottom end of the outlet tube (17') from the smaller funnel (15') to the outlet (17) of the bigger funnel (15),

   all dimension in meters and the value of the constant varies with different

3. An apparatus according to claim 1 **characterized by**

   the outlet of the feed tube (13) ending downwards towards the upper surface (4) of the bed (1).

4. An apparatus according to claim 3 **characterized by**

   the feed tube (13) being a telescopic tube.

5. An apparatus according to claim 1 **characterized by**

   the inlet of the liquid or gas being a ring chamber (7) , disposed around the cylindrical part (10) of the vessel and equipped with tubes having nozzles (14), said tubes being arranged radially inwards and upwards from the ring chamber (7) to the center of the vessel.

6. An apparatus according to claim 5 **characterized by**

   said tube being in form of U-shaped or semicircular hoods (16) that are open downward.

**Patentansprüche**

1. Eine Vorrichtung zur Durchführung eines Gegenströmungs-Verfahrens in einem Reaktionsgefäß mit einem festen Granulat (5), durch das eine Gegenströmung einer Flüssigkeit oder eines Gases geführt wird, **gekennzeichnet durch** ein geschlossenes Reaktionsgefäß (Fig. 1) mit einem senkrechten zylindrischen Teil (10) und einem unteren konischen Teil (12), das sich vom zylindrischen Teil nach unten hin verjüngt (10) und in einem Ausgang (8) für das Granulat (5) endet, und einen Trichter (2) oberhalb des Behälters (Fig. 1), der unten in einem Rohr (13) endet. das das Granulat (5) **durch** Schwerkraft vom oberen Trichter (2) in die Mitte des zylindrischen Teils (10) von besagtem Behälter lenkt, von wo es dann frei zu der Wand des zylindrischen Teils (10) fließt, über eine Oberfläche (4), die **durch** den Rutschwinkel des Granulats (5) erzeugt wird, und bewegt sich stetig nach unten und verlässt den Behälter **durch** den Ausgang (8), wobei der Behälter mit einem Eintritt (7) und einem Ausgang (3) für die Flüssigkeit oder das Gas ausgestattet ist. wobei der Eintritt (7) unterhalb der Oberfläche (4) des Granulatbetts (5) liegt, so dass die geplante Stärke der Reaktionszone entsteht und der Ausgang (3) oberhalb der Spitzenoberfläche liegt (4), und unterhalb des Bodens der Reaktionszone sind eine Anzahl von konzentrischen, runden Trichtern (15, 15') angeordnet, mit konischen Oberflächen. die parallel zu dem unteren konischen Teil (12) des Reaktionsgefäß sind und deren obere Enden unmittelbar unterhalb der Reaktionszone liegen, und die Trichter (15. 15') enden unten mit einem rohrförmigen Ausgang (17, 17').

2. Vorrichtung nach Anspruch 1, **gekennzeichnet durch** den Abstand vom Bodenende des Ausgangsrohrs (17') von einem oberen Trichter (15') zu dem Ausgang (17) des nächsten, unteren Trichter (15), mit der Formel:

$$d_t{}^2 \times ((2 \times l_f \times constant + d_n)^2 - d_y{}^2) = d_i{}^2 \times (D_t{}^2 - d_t{}^2)$$

$D_t$ ist der Durchmesser des unteren, größeren Trichters (15),
$d_t$ ist der Durchmesser des oberen, kleineren Trichters (15'),
$d_i$ ist der Innendurchmesser des Auslassrohrs (17') des oberen, kleineren Trichters (15'),
$d_y$ ist der Auslassdurchmesser des Auslassrohrs (17') desselben Trichters (15')
$d_n$ ist der Innendurchmesser des Auslassrohrs (17) des unteren größeren Trichters (15),
$l_f$ ist der Abstand vom Bodenende des Auslassrohrs (17') vom kleineren Trichter (15') zu dem Ausgang (17) des größeren Trichters (15), alle Größen in Metern und der Wert der Konstante variiert mit verschiedenen Materialien von 0,12 bis 0,21.

3. Vorrichtung nach Anspruch 1, **gekennzeichnet dadurch, dass** der Ausgang des Zufuhrrohrs (13) unten zu der Oberfläche (4) des Bettes (1) hin endet.

4. Vorrichtung nach Anspruch 3, **gekennzeichnet dadurch, dass** das Zufuhrrohr (13) ein teleskopisches Rohr ist.

5. Vorrichtung nach Anspruch 1, **gekennzeichnet dadurch, dass** der Einlass für die Flüssigkeit oder das Gas eine Ringkammer (7) ist, die um den zylindrischen Teil (10) des Behälters herum angeordnet und mit Rohren mit Düsen ausgestattet ist (14). wobei besagte Rohre radial nach innen und aufwärts von der Ringkammer (7) zur Mitte des Behälters laufen.

6. Vorrichtung nach Anspruch 5, **gekennzeichnet dadurch, dass** besagtes Rohr die Form von U-förmigen oder halbrunden Hauben (16) hat, die nach unten offen sind.

**Revendications**

1. Un appareil pour réaliser un processus contre-courant dans une cuve de réaction avec un matériau solide, granuleux (5) à travers lequel un contre-courant d'un liquide ou d'un gaz est conduit, **caractérisé par**

- une cuve de réaction fermée (Fig. 1) avec une partie verticale, cylindrique (10) et une partie conique plus basse (12) laquelle s'effile vers le bas à partir de la partie cylindrique (10) et termine dans une sortie (8) pour le matériau granuleux (5), et
- une trémie (2) située au-dessus de la cuve (Fig. 1) laquelle trémie (2) s'achève vers le bas dans un tuyau (13), lequel porte le matériau granuleux (5) à se déplacer par gravité à partir de la trémie supérieure (2) vers le centre de la partie cylindrique (10) de ladite cuve et ensuite s'écoule librement du centre vers la paroi de la partie cylindrique (10) au-dessus d'une surface (4) laquelle est créée par l'angle de glissement du matériau granuleux (5) et après quoi est continuellement dirigé vers le bas et quitte la cuve à travers la sortie (8).

- la cuve ayant été équipée d'une entrée (7) et d'une sortie (3) du liquide ou du gaz où l'entrée (7) est située au- dessous de la surface supérieure (4) du lit de matériau granuleux (5) de telle façon que l'épaisseur planifiée de la zone de réaction soit formée et la sortie (3) soit située au-dessus de la surface supérieure (4),
- et au-dessous du fond de la zone de réaction un certain nombre d'entonnoirs circulaires, concentriques (15, 15') sont disposés, ayant des surfaces coniques qui sont parallèles à la partie conique plus basse (12) de la cuve de réaction et ayant des extrémités supérieures immédiatement en-dessous de ladite zone de réaction et les entonnoirs (15,15') terminent vers le bas avec une sortie tubulaire (17, 17').

2. Un appareil selon la revendication 1, **caractérisé par**

- la distance à partir de l'extrémité du dessous du tube de sortie (17') d'un entonnoir supérieur (15') vers la sortie (17) de l'entonnoir successif situé plus bas (15) étant choisie selon la formule:

$$d_t^2 \times ((2 \times l_f \times constant + d_n)^2 - d_y^2) = d_j^2 \times (D_t^2 - d_t^2)$$

où

$D_t$ est le diamètre de l'entonnoir le plus gros, situé au plus bas (15),
$d_t$ est le diamètre de l'entonnoir plus petit, situé au-dessus (15'),
$d_j$ est le diamètre intérieur du tube de sortie (17') de l'entonnoir plus petit. situé au-dessus (15'),
$d_y$ est le diamètre externe du tube de sortie (17') du même entonnoir (15')
$d_n$ est le diamètre intérieur du tube de sortie (17) de l'entonnoir plus gros. situé plus bas (15),
$l_f$ est la distance à partir de l'extrémité du dessous du tube de sortie (17') de l'entonnoir plus petit (15') jusqu'à la sortie (17) de l'entonnoir plus gros (15), toutes les dimensions exprimées en mètres et la valeur de la constante varie selon les différents matériaux de 0,12 à 0,21.

3. Un appareil selon la revendication 1, **caractérisé par**
la sortie du tube d'alimentation (13) terminant vers le bas vers la surface supérieure (4) du lit (1).

4. Un appareil selon la revendication 3, **caractérisé**
**par** le tube d'alimentation (13) étant un tube télescopique.

5. Un appareil selon la revendication 1, **caractérisé par**
l'admission du liquide ou du gaz étant une chambre circulaire (7), disposée autour de la partie cylindrique (10) de la cuve et équipée avec des tubes ayant des gicleurs (14), lesdits tubes étant disposés en étoile vers l'intérieur et vers le haut à partir de la chambre circulaire (7) vers le centre de la cuve.

6. Un appareil selon la revendication 5, **caractérisé par**
ledit tube étant en forme de U ou de capuchons semi-circulaires (16) qui sont ouverts vers le bas.

FIG. 1

FIG. 2

FIG. 3

EP 0 837 727 B1